(19) Europäisches Patentamt
European Patent Office
Office européen des brevets

(11) **EP 4 191 450 A1**

(12) # EUROPEAN PATENT APPLICATION

(43) Date of publication:
**07.06.2023 Bulletin 2023/23**

(21) Application number: **22201662.8**

(22) Date of filing: **14.10.2022**

(51) International Patent Classification (IPC):
***G06F 21/54*** (2013.01)

(52) Cooperative Patent Classification (CPC):
**G06F 21/567; G06F 21/54; G06F 21/554**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.12.2021 US 202117541243**

(71) Applicant: **INTEL Corporation**
**Santa Clara, CA 95054 (US)**

(72) Inventors:
- **ZHANG, Zheng**
**Portland, 97229 (US)**
- **GHOSH, Rahuldeva**
**Portland, 97229 (US)**

(74) Representative: **Maiwald GmbH**
**Engineering**
**Elisenhof**
**Elisenstrasse 3**
**80335 München (DE)**

(54) **DETECTING DATA ORIENTED ATTACKS USING HARDWARE-BASED DATA FLOW ANOMALY DETECTION**

(57) A system includes a processor to execute a data flow instrumented application to generate data trace data representing data flows of the data flow instrumented application; processor trace circuitry to generate processor trace (PT) data from the data trace data; and a data flow detecting pipeline to monitor the data flows represented by the PT data in real time and generate an alert if one or more of the data flows deviates from a data flow model for the data flow instrumented application.

FIG. 1

EP 4 191 450 A1

**Description**

<u>FIELD</u>

Embodiments relate generally to computing system security, and more particularly, to detecting data oriented attacks on computing systems.

<u>BACKGROUND</u>

Exploiting and hijacking vulnerable benign applications is a major attack vector for malware threats. Malware can be used to attack program control flows so that attackers can either directly inject and execute malicious instructions or redirect and hijack original benign instructions for malicious purposes. Multiple security techniques (such as memory protection approaches of data execution prevention (DEP), address space layout randomization (ASLR), and Stack Canary; control flow integrity (CFI) approaches such as Clang CFI, Microsoft® control flow guard (CFG), and Intel® Control-flow Enforcement Technology (CET); and memory sanitization approaches of Clang Address Sanitization (ASan) and memory tagging) have been developed and deployed to seek to prevent and/or mitigate control flow attacks. However, as program control flows become increasingly secure, attackers are starting to attack data flows. Data oriented attacks such as data oriented programming (DOP) and counterfeit object-oriented programming (COOP) are known to be capable of bypassing CFI-based attack deterrence approaches. Although there are existing research initiatives seeking to protect program data flows, many of them are limited by performance overheads and lack of effectiveness against unknown data attacks.

<u>BRIEF DESCRIPTION OF THE DRAWINGS</u>

So that the manner in which the above recited features of the present embodiments can be understood in detail, a more particular description of the embodiments, briefly summarized above, may be had by reference to embodiments, some of which are illustrated in the appended drawings. It is to be noted, however, that the appended drawings illustrate only typical embodiments and are therefore not to be considered limiting of its scope. The figures are not to scale. In general, the same reference numbers will be used throughout the drawings and accompanying written description to refer to the same or like parts.

Figure 1 is a diagram of a data flow anomaly detection system according to some embodiments.
Figure 2 is an example of a data flow graph.
Figure 3 is a diagram of a training system for a data flow anomaly detection system according to some embodiments.
Figure 4 is a flow diagram of data flow model training according to some embodiments.
Figure 5 is a diagram of a production system for a data flow anomaly detection system according to some embodiments.
Figure 6 is a flow diagram of feedback-based continuous learning in a data flow anomaly detection system according to some embodiments.
Figure 7 is a flow diagram of data flow tracking according to some embodiments.
Figure 8 is another flow diagram of data flow tracking according to some embodiments.
Figure 9 is a flow diagram of data flow anomaly detection processing according to some embodiments.
Figure 10 is a schematic diagram of an illustrative electronic computing device to perform data flow anomaly detection processing according to some embodiments.

<u>DETAILED DESCRIPTION</u>

Implementations of the technology described herein provide a method and system for data flow anomaly detection that monitors and protects control flows of an application program using hardware (HW) based telemetry data. In an embodiment, the data flow anomaly detection (DFAD) system monitors program data flows and detects data flow anomalies using processor trace (PT) telemetry data (such as is provided by Intel® Processor Trace functionality in Intel® processors).

The DFAD system instruments monitored application programs to generate metadata about data accesses at selected application programming interface (API) calls and code locations. The DFAD system encodes data trace records in a compact format and forwards the metadata to PT buffers using, in at least one embodiment, a PTWRITE instruction. The DFAD system keeps track of data sources and generates data flow records from the data trace records. The DFAD system uses a machine learning (ML)-based learning method to train a data flow model for the application from the data flow records. The DFAD system uses a ML-based detection method to detect data flow anomalies using the data flow model. The DFAD system includes a ML-based continuous learning method to continuously improve the data flow model after deployment in a production system. The DFAD system also provides a unified data flow monitoring method to monitor both control and data flows simultaneously.

The DFAD system reduces the computational overhead of data flow monitoring and provides data flow anomaly detection in real-time. The DFAD system also can detect unknown data flow attacks.

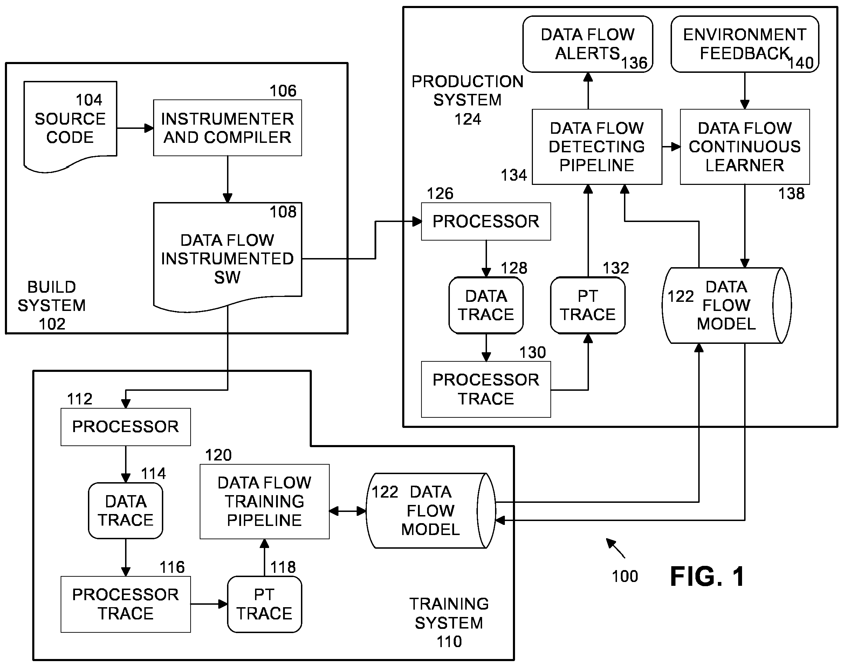

Figure 1 is a diagram of a data flow anomaly detection system 100 according to some embodiments. The DFAD system 100 includes a build system 102, a training system 110, and a production system 124. Build system 102, training system 110, and production system 110 may be implemented as one or more computing systems, such as a personal computer (PC), server, mobile phone, tablet computer, or other computing system capable of executing processor-readable instructions. Build system 102, training system 110, and production system 124 may include one or more configurable or programmable elements, such as one or more configurable integrated circuits, capable of executing machine-readable instruction sets that cause the configurable or programmable elements to combine in a particular manner to create the respective system circuitry. In some implementations, the respective circuitry may include one or more stand-alone devices or systems, for example, a single surface-mount or socket-mount integrated circuit. In other implementations, the respective circuitry may be provided in whole or in part via one or more processors, controllers, digital signal processors (DSPs), reduced instruction set computers (RISCs), systems-on-a-chip (SOCs), or application specific integrated circuits (ASICs) capable of providing all or a portion of processing capabilities of the build system 102, training system 110 and production system 124.

Build system 102 is an isolated and/or controlled development computing environment, where an application developer instruments the source code 104 of an application program and uses a compiler, which is adapted to support such instrumentation, to compile the source code 104 into one or more instrumented software (SW) binaries called a data flow instrumented SW 108 herein. Instrumenter and compiler 106 embeds data traces at selected function calls and code blocks of the application and compiles the instrumented source code. In an embodiment, the embedding of the data traces is implemented using an Intel® PTWRITE instruction. Execution of the PTWRITE instruction reads data from a source operand and sends the data to a processor trace hardware function to be encoded in a processor trace write (PTW) packet. Figure 1 shows instrumenter and compiler 106 as a single component, however, in some implementations the instrumenter may be separate from the compiler.

Training system 110 is an isolated and/or controlled computing environment where the data flow instrumented SW 108 is executed to train the data flow model 122 of the application represented by the data flow instrumented SW. The data flow instrumented SW 108 is first executed by processor 112 in the training system 110 to monitor normal data flows using processor trace (PT) (e.g., HW generated) telemetry data provided by processor trace 116. Thus, processor 112 generates data trace 114 data from executing data flow instrumented SW 108 and processor trace 116 generates PT trace 118 data from data trace 114 data. In an embodiment, processor trace 116 circuitry is implemented as part of processor 112. Data flow training pipeline 120 (implemented in either software, firmware or hardware) trains data flow model 122 using PT trace 118 data. Data flow model 122 represents the normal data flows of data flow instrumented SW 108. The data flow instrumented SW 108 and data flow model 122 are then deployed to production system 124, where the application may be exposed to attacks while being executed by the production system.

Production system 124 is an uncontrolled computing environment which may be accessible to users of the application and possibly malicious actors (e.g., attackers, hackers, etc.). In an embodiment, production system 124 may be a part of a computer server (e.g., possibly providing cloud computing services to users) accessible over an intranet within an organization or the publicly accessible Internet. As in the training system 110, processor 126 of production system 124 executes data flow instrumented SW 108 and generates data trace 128 data and processor trace 130 generates PT trace 132 data. Data flow detecting pipeline 134 (implemented in either software, firmware or hardware) monitors data flows generated by execution of data flow instrumented SW 108 (as represented, at least in part by, PT trace 132 data) using data flow model 122 and generates one or more data flow alerts 136 in real-time (e.g., as the application is being executed) if the data flows deviate from the data flow model 122. In at least one scenario, the monitored data flows deviate from the data flow model when the application has been attacked or hacked. Production system 124 includes data flow continuous learner 138 to receive environment feedback 140 from external entities (such as anti-virus (AV) and system security services, information technology (IT) administrators or end users, etc.) and continuously update data flow model 122 and associated time series heuristics. In an embodiment, data flow model 122 as updated by production system 124 is forwarded to training system 110 for further training to update the data flow model.

An example of a portion of source code 104 is shown below.

```
LINE 1:     char str[1024];
LINE 2:     fgets(str, sizeof(str), stdin);
LINE 3:     fputs(str, stdout);
```

A data flow describes how information is transferred from a source node, which generates or transforms data, to a sink node, which receives data without transformation. For the sample code snippet shown above, the data (str) flows from LINE 2 (source node) to LINE 3 (sink node). Each data flow may be represented as a tuple <source, sink, weight>, in which source is the identifier of the source node, sink is the identifier of the sink node, and weight is the maximum size of the data that flows from source to sink. As an example, the data flow representing the sample code snippet may be represented as <LINE2, LINE3, 1024>.

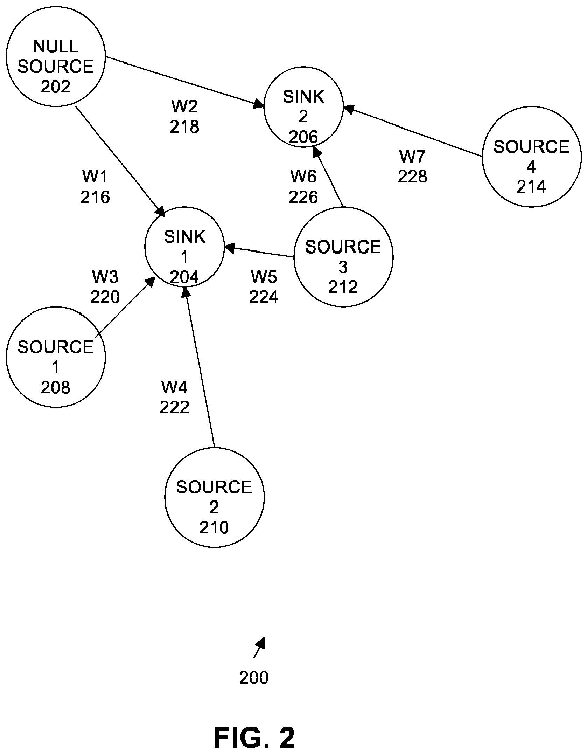

A set of data flows for an application may be represented as a data flow graph. Figure 2 is an example of a data flow graph 200, which includes source nodes named null source 202, source 1 208, source 2 210, source 3 212, and source 4 214, sink nodes named sink 1 204 and sink 2 206, and data flows from source nodes to sink nodes named W1 216, W2 218, W3 220, W4 220, W5 224, W6 226 and W7 228. The weights correspond to the data lengths of the data flows. A data flow graph model may contain the following attributes: 1) a list of valid data source nodes; 2) a list of valid data sink nodes; and 3) a list of valid data flows.

It is possible that some data flows won't have valid source nodes, either because the data was received from external sources (e.g., over a network or from a file system), or because the source nodes could not be reliably identified. In these cases, the resulting data flows may have a NULL data source with the source node identifier being set to a predefined special identifier (e.g., zero).

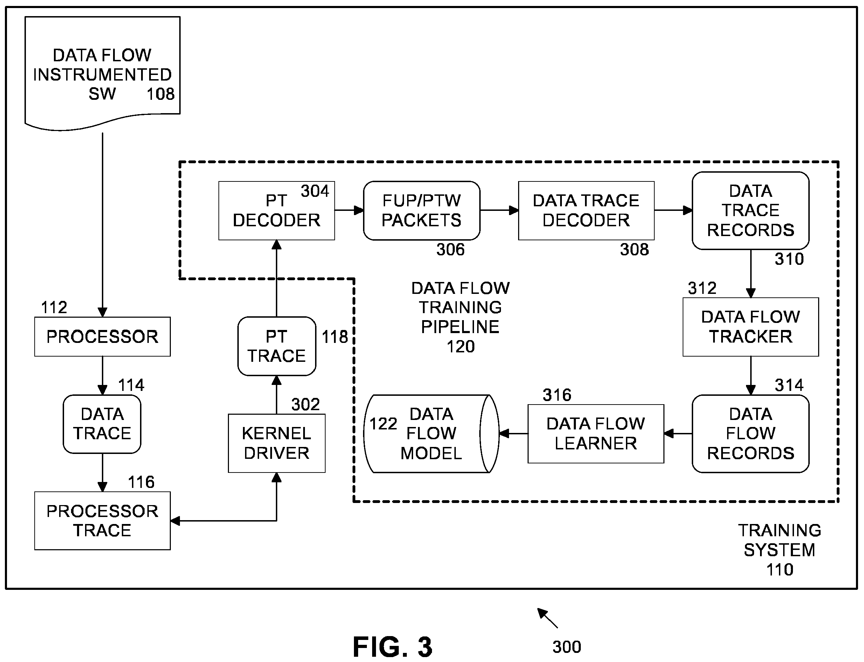

Figure 3 is a diagram 300 of a training system 110 for a data flow anomaly detection system according to some embodiments. Data flow instrumented SW 108 is executed by processor 112 of training system 110 to generate data trace 114 data. Kernel driver 302 configures processor 112 to enable processor trace 116 to generate PT trace 118 data from execution of data flow instrumented SW 108. In an embodiment, the executing data flow instrumented SW 108 emits data traces through execution of embedded PTWRITE instructions. The data trace 114 data is captured by processor 112 and stored in PT trace buffers (not shown in Figure 3). Kernel driver 302 harvests the PT trace buffers and forwards the PT trace 118 data to data flow training pipeline 120. Data flow training pipeline 120 reads PT trace 118 data by PT decoder 304. PT decoder generates flow update (FUP)/processor trace write (PTW) packets 306. Data trace decoder 308 reads FUP/PTW packets 306 and generates data trace records 310 from the FUP/PTW packets. Data flow tracker 312 reads data trace records 310 and generates data flow records 314 from the data trace records. Further description of PT decoder 304, data trace decoder 308, and data flow tracker 312 is below. Data flow learner 316 trains data flow graphs in data flow model 122 using data flow records 314. Data flow model 122 may then be stored in a storage medium in training system 110 or other location.

Because PT trace 118 data includes only expected (e.g., "normal") data from execution of data flow instrumented SW 108 that is assumed to be protected, the data flow model is trained in an unsupervised manner.

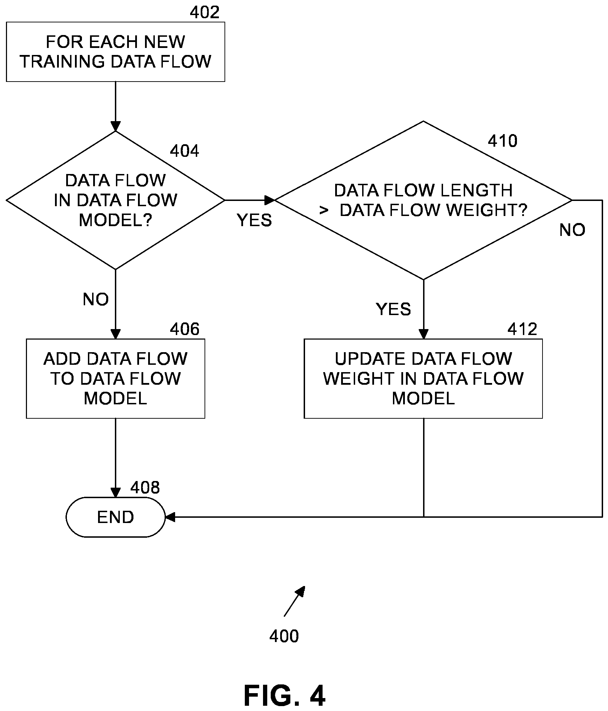

Figure 4 is a flow diagram of data flow model training according to some embodiments. In this example, for each new training data flow at block 402, data flow learner 316 determines if the new training data flow is already in data flow model 122 at block 404. If not, data flow learner 316 add the new training data flow to the data flow model at block 406. If more data flows need to be processed for data flow records 314, control resumes at block 402; otherwise processing ends at block 408. At block 404, if the new training data flow is already in the data flow model, at block 410 data flow learner 316 determines if the length of the new training data flow is greater than a data flow weight. Each data flow in the data flow model has a weight (the maximum length of data flowing from source to sink nodes). If the length of a new data flow record is larger than the weight of the data flow in the data flow model, the data flow weight in the data flow model will be updated. If so, data flow learner 316 updates the data flow weight for the current data flow in the data flow model and processing of the current data flow ends at block 408. If not, no update to the weight is needed and processing of the current flow ends at block 408. Once all data flows for data flow instrumented SW 108 are done (e.g., all data flow records 314 of data flow instrumented SW 108 have been processed), data flow model 122 represents the "correct" or "normal" execution of the instrumented application.

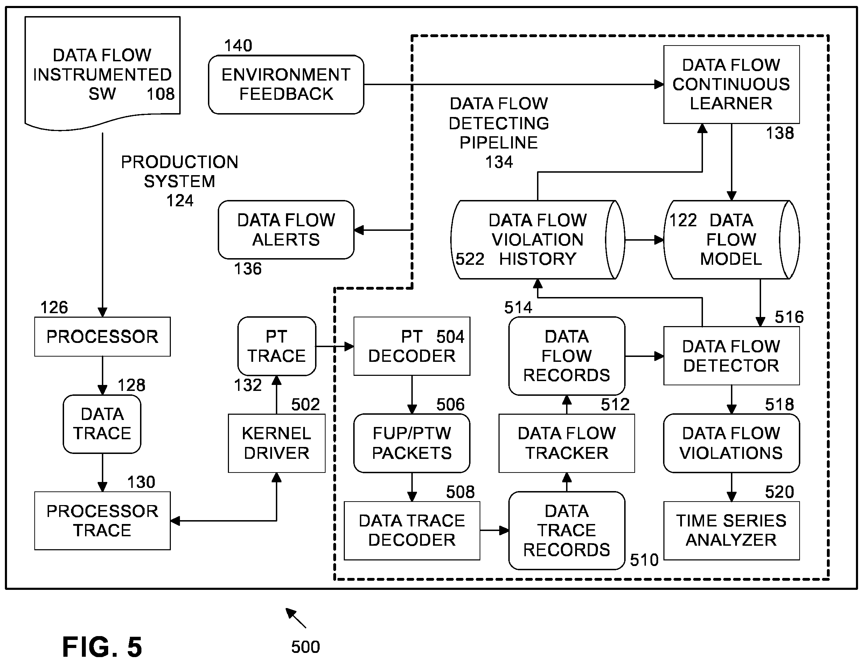

Figure 5 is a diagram 500 of a production system 124 for a data flow anomaly detection system according to some embodiments. Data flow instrumented SW 108 is executed by processor 126 of production system 124 to generate data trace 128 data. Kernel driver 502 configures processor 126 to enable processor trace 130 to generate PT trace 132 data from execution of data flow instrumented SW 108. In an embodiment, the executing data flow instrumented SW 108 emits data traces through execution of embedded PTWRITE instructions. The data trace 128 data is captured by processor 126 and stored in PT trace buffers (not shown in Figure 5). Kernel driver 502 harvests the PT trace buffers and forwards the PT trace 132 data to data flow detecting pipeline 134. Data flow detecting pipeline 134 reads PT trace 132 data by PT decoder 504. PT decoder generates flow update (FUP)/processor trace write (PTW) packets 506. Data trace decoder 508 reads FUP/PTW packets 506 and generates data trace records 510 from the FUP/PTW packets. Data flow tracker 512 reads data trace records 510 and generates data flow records 514 from the data trace records. Further description of PT decoder 504, data trace decoder 508, and data flow tracker 512 is below.

Data flow detector 516 verifies whether the incoming data flow records 514 conform to data flow model 122. That is, the sequence and content of the data flows from execution of data flow instrumented SW 108 in training system 110 should match the sequence and content of the data flows from execution of data flow instrumented SW 108 in production system 124. If not, one or more data flow violations 518 may be detected (e.g., where are there mismatches). Data flow violations 518 are reported to time series analyzer 520 and data flow records 514 of detected data flow violations are stored in data flow violation history 522. Time series analyzer 520 monitors data flow violations 518 detected over a period of time. If the number of data flow violations exceeds a predetermined level during a specified training time, time series analyzer 520 generates one or more data flow alerts 136 to notify security services and/or end users of production system 124 of the suspicious activity while executing data flow instrumented SW 108.

When an unknown data flow arrives, data flow detector 516 checks whether the data flow conforms to the data flow model 122 using the following equation:

$$\text{is valid(data flow)} = \text{flow} \in \{\text{valid data flow set}\} \text{ and (data flow data length}$$

$$\leq \text{ model data flow weight)}$$

For invalid data flows, there are four different types of data flow violations: 1) source violation indicates that the source node of the data flow doesn't belong to the source node list of the data flow model. 2) sink violation indicates the sink node of the data flow doesn't belong to the sink node list of the data flow model. 3) flow violation indicates the data flow doesn't belong to the flow list. 4) weight violation indicates the data flow length exceeds the maximum flow weight in the model.

Data flow continuous learner 138 receives environment feedback 140 from security services and/or end users and continuously updates data flow model 122 based at least in part on the environment feedback. This improves the effectiveness of the data flow detecting pipeline 134 over time. With this continuous online learning process, the data flow model becomes increasingly complete, and, consequently, the signal-to-noise ratio of the data flow alerts 136 will continuously increase.

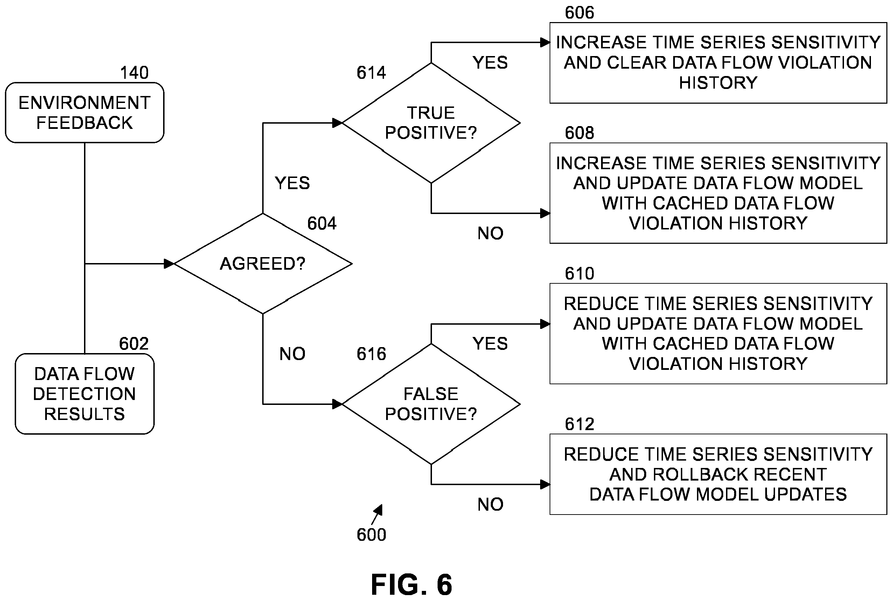

Figure 6 is a flow diagram of feedback-based continuous learning 600 in a data flow anomaly detection system 100 according to some embodiments. At block 604, data flow continuous learner 138 compares environment feedback 140 with data flow detection results 602 (e.g., as represented by data flow model 122 and data flow violation history 522) at block 604. The environment feedback 140 is received from external authority entities (e.g., IT administrators or AV security services), which can provide delayed but definitive signals about the DFAD system or application status. The data flow continuous learner compares the external feedback against DFAD detection history to determine the effectiveness of previous detections. True positive means that the DFAD system detected an anomaly and that the environmental feedback also indicated that system was attacked. False positive means that the DFAD system detected an anomaly, but the environmental feedback indicated the system was not attacked. True negative means that the DFAD system didn't detect anomalies, and that environmental feedback 140 also indicated the system was not attacked. False negative means that the DFAD system didn't detect anomalies, but environmental feedback 140 indicated the system was attacked.

If the environment feedback 140 agrees with the data flow detection results 602 at block 604, then at block 614 data flow continuous learner 138 determines if this result is a true positive. If so, at block 606 data flow continuous learner increases a time series sensitivity value or data flow model 122 and clears the data flow violation history 522 for the data flow instrumented SW 108. Time series sensitivity values are parameters in time series heuristics of time series analyzer 520 that control the thresholds of detection decisions. In an embodiment, there is one time series sensitivity value for a data flow model.

Otherwise, at block 608 data flow continuous learner 138 increases a time series sensitivity value for data flow model 122 and updates the data flow model 122 with the cached data from data flow violation history 522 for data flow instrumented SW 108. If the environment feedback 140 does not agree with the data flow detection results 602 at block 604, then at block 616 data flow continuous learner 138 determines if this result is a false positive. If so, then at block 610 data flow continuous learner 138 reduces a time series sensitivity value for data flow model 122 and updates the data flow model 122 with the cached data from data flow violation history 522 for data flow instrumented SW 108. Otherwise, at block 612 data flow continuous learner 138 reduces a time series sensitivity value for data flow model 122 and rolls back recent updates to data flow model 122.

The technology described herein is designed to instrument source code 104 to collect data trace information about selected function calls and code blocks. The instrumentation can be done either manually by SW developers or automatically by compilers.

In an embodiment, the following three instrumentation primitives are supported:
TRACE_INPUT_BUFFER (addr, len): to generate a trace of an input data buffer. TRACE_OUTPUT_BUFFER (addr, len): to generate a trace of an output data buffer. TRACE_INPUT_OUTPUT_BUFFER (addr, len): to generate a trace of an input/output data buffer.

In other embodiments, other instrumentation primitives may be added. In an embodiment, these three instrumentation primitives may be defined as follows. In this example, each primitive uses a low-level WRITE_DATA_TRACE primitive to emit 64-bit data trace metadata.

```
    #define TRACE_INPUT_BUFFER(addr, len) \
{ \
    WRITE_DATA_TRACE(INPUT_BUFFER | reinterpret_cast<uint64_t>(addr)); \
    WRITE_DATA_TRACE(len); \
}

  #define TRACE_OUTPUT_BUFFER(addr, len)    \
{                              \
    WRITE_DATA_TRACE(OUTPUT_BUFFER |
reinterpret_cast<uint64_t>(addr)); \
    WRITE_DATA_TRACE(len);            \
}

  #define TRACE_INPUT_OUTPUT_BUFFER(addr, len)    \
{                              \
    WRITE_DATA_TRACE(INPUT_OUTPUT_BUFFER |
reinterpret_cast<uint64_t>(addr)); \
    WRITE_DATA_TRACE(len);            \
}
```

An example of how a snippet of source code may be instrumented using these instrumentation primitives is shown below. For example, a simple mempy() call may be instrumented with the TRACE_INPUT_BUFFER and TRACE_OUTPUT_BUFFER primitives to trace the input data buffer and an output data buffer.

Sample code before instrumentation:

memcpy(dst, src, len);

Sample code after instrumentation:

```
TRACE_INPUT_BUFFER (src, len);
TRACE_OUTPUT_BUFFER (dst, len);
memcpy(dst, src, len);
```

Embodiments provide a novel way to encode data traces into a compact 128-bit data structure in a data trace record 310, 510, which consists of the following fields: 1) access type (two bits) identifies the buffer access type (INPUT | OUTPUT | INPUT_OUTPUT); 2) buffer address (62 bits) defines the buffer linear address; and 3) buffer length (64 bits) defines the buffer length. In an embodiment, the address field is 62 bits long, instead of 64 bits long. Because the 64-bit linear addresses in modern processors follow a canonical address format, in which the values of address bit 63 to bit 48 are either all 0's or all 1's, in one embodiment the access type is encoded in address bits 62 and 63. This helps to reduce the data trace record 310, 510 size without losing any information. In other embodiments, more fields may be added to this data trace record format.

The WRITE DATA TRACE primitive may be implemented by either SW or HW methods. For SW-based implementations, processor trace 116, 130 either records a 64-bit data entry into a memory buffer or forwards the data entry to an internal or external analysis entity. For HW-based implementations, the processor executes an instruction that can emit the 64-bit data entry to a processor telemetry buffer.

Most existing security research projects use SW-based instrumentation methods. Because these SW methods incur high performance overheads, they are rarely used in production environments. Embodiments described herein rely on a HW-based instruction method and use the PTWRITE instruction available on Intel® processors as an example instruction for this purpose. However, the approach described herein also applies to both SW implementations and non-Intel® HW-based implementations.

In an embodiment, the WRITE_DATA_TRACE primitive can be implemented using the Intel® PTWRITE instruction. If PTWRITE is used, embodiments configure the IA32_RTIT_CTL model specific register (MSR) of Intel™

processors with the PT trace configuration bits (FUPonPTW | PTWEn) set to 1. This will enable PTWRITE instructions to emit PTW trace packets to PT buffers and to insert a Flow Update Packet (FUP), which contains the addresses of the PTWRITE instructions, before the PTWRITE packet. With this configuration, every TRACE_BUFFER primitive results in four PT trace packets: 1) A FUP (flow update) packet of the first ptwrite (addr) instruction; 2) A PTW (ptwrite) packet with the payload content addr; 3) A FUP (flow update) packet of the second ptwrite (len) instruction; AND 4) A PTW (ptwrite) packet with the payload content len.

As mentioned above, data trace records 310, 510 are packed and may be implemented by either SW or HW based methods. These compacted data trace records 310, 510 need to be decoded by the data trace decoder 308, 508. In an embodiment, the decoded data trace records contain the following fields: 1) trace location is the 64-bit linear address of the first WRITE_DATA_TRACE (addr) primitive; 2) access type is the buffer access type (INPUT | OUTPUT | INPUT_OUTPUT); 3) buffer address is the 64-bit buffer linear address; and 4) buffer length is the 64-bit buffer length.

Because a data trace record 310, 510 is transmitted through four consecutive PT packets, the data trace decoder 308, 508 needs to locate the boundaries of data trace records before starting decoding. This can be implemented in one embodiment by checking the distances of the internet protocol (IP) addresses within two neighboring FUP packets. Because the IP addresses with two FUP packets of the same TRACE_BUFFER primitive always have the same distances, data trace decoder 308, 508 can leverage this feature to quickly locate the correct data trace record boundaries.

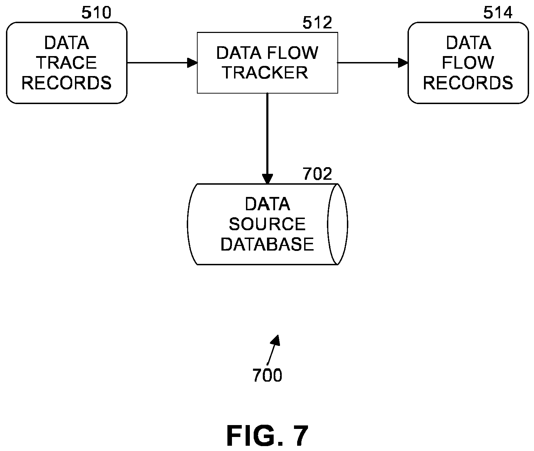

Figure 7 is a flow diagram of data flow tracking 700 according to some embodiments. Data flow tracker 512 processes incoming data trace records 510, finds the source locations of input buffers, and generates data flow records 514. Data flow tracker 512 keeps track of the originations of the data source buffers and converts the data trace records 510, which contain the information about the individual data access, into data flow records 514, which contain the information about data sources and destinations. Data flow tracker 512 also manages data source database 702 and continuously updates the data source database with new source data information. The data source database is an in-memory database (or data structure) that stores recent output buffer data trace records (buffer address, buffer length, trace location). The data source database 702 is continuously updated based on receiving new output or input/output data traces and purges old or stale data sources.

In an embodiment, data flow records 314, 514 include: 1) source location is the trace location of the data source for the current data trace record; 2) sink location is the trace location of the current data trace record; and 3) data length is the length of data flown from the data source to the data destination. In some cases, a data trace record may have multiple data sources (e.g., each data source outputs a part of the input buffer for the data trace record). In this situation, a data trace record may be translated into multiple data flow records 314, 514. Each data flow record contains the data flows from a given data source.

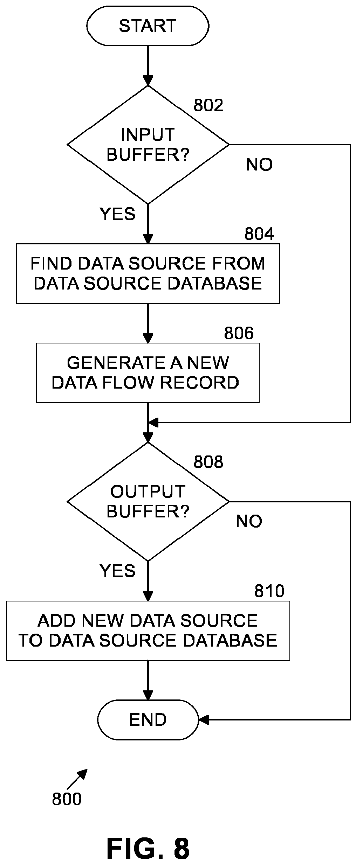

Figure 8 is another flow diagram of data flow tracking 800 according to some embodiments. At block 802, data flow tracker 512 determines if a current data flow in a data trace record 510 uses an input buffer. If so, at block 804 data flow tracker 512 finds a data source from data source database 702. At block 806, data flow tracker 512 generates a new data flow record 514. If an input buffer is not used, processing continues with block 808. At block 808, data flow tracker 512 determines if the current data flow in the data trace record 510 uses an output buffer. If so, data flow tracker 512 adds a new data source to data source database 702 at block 810. If an output buffer is not used at block 808, then processing ends.

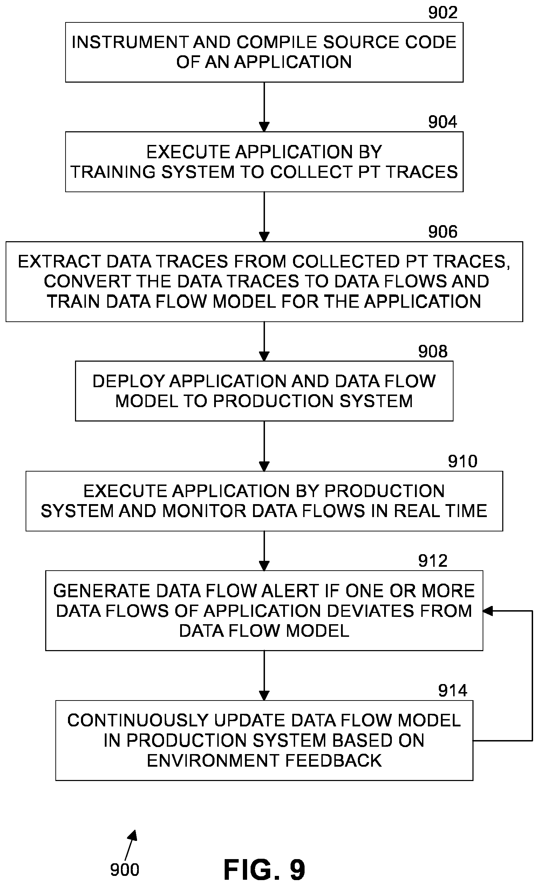

Figure 9 is a flow diagram of data flow anomaly detection processing according to some embodiments. At block 902, build system 102 instruments and compiles the source code 104 of an application. At block 904, training system 110 executes the instrumented application to collect processor trace (PT) traces. At block 906, a data flow training pipeline 120 of the training system extracts data trace records 310 from collected PT traces 118, converts them to data flow records, and trains a data flow model 122 for the application. At block 908, the instrumented application 108 and associated trained data flow model 122 are deployed to a production system 124. At block 910, production system 124 executes the instrumented application and monitors in real-time the data flows of the instrumented application. At block 912, data flow detecting pipeline 134 generates a data flow alert 136 if one or more data flows of the instrumented application being executed deviates from the data flow model 122 for the instrumented application. At block 914, data flow continuous learner 138 of the data flow detecting pipeline 134 in the production system 124 continuously updates the data flow model 122 for the instrumented application based at least in part on environment feedback 140. Processing may continue at block 912 until overall execution of the instrumented application is complete.

In another embodiment, the DFAD system may be extended to monitor both control flow and data flow statuses at runtime and generate control flow and data flow alerts when the program control or data flow behaviors deviate from the expected behavior.

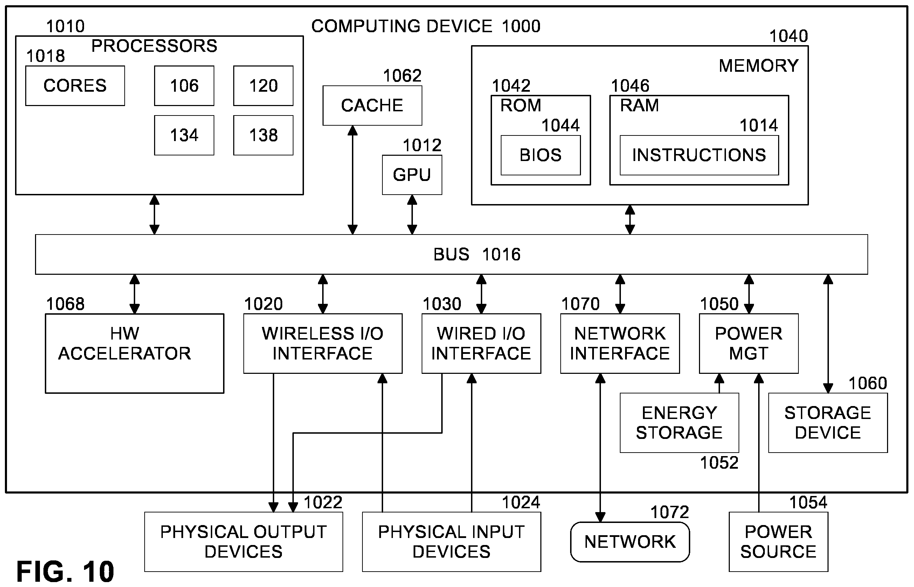

Figure 10 is a schematic diagram of an illustrative electronic computing device to perform data flow anomaly detection processing according to some embodiments. In some embodiments, computing device 1000 includes one or more processors 1010 to one or more of instrumented and compiler 106, data flow training pipeline 120, data flow detecting pipeline 134, and data flow continuous learner 138. In some embodiments, the computing device 1000 includes one or more hardware accelerators 1068.

In some embodiments, the computing device is to implement processing of DFAD system, as provided in Figures 1-9 above.

The computing device 1000 may additionally include one or more of the following: cache 1062, a graphical processing unit (GPU) 1012 (which may be the hardware accelerator in some implementations), a wireless input/output (I/O) interface 1020, a wired I/O interface 1030, system memory 1040, power management circuitry 1080, non-transitory storage device 1060, and a network interface 1070 for connection to a network 1072. The following discussion provides a brief, general description of the components forming the illustrative computing device 1000. Example, non-limiting computing devices 1000 may include a desktop computing device, blade server device, workstation, laptop computer, mobile phone, tablet computer, personal digital assistant, or similar device or system.

In embodiments, the processor cores 1018 are capable of executing machine-readable instruction sets 1014, reading data and/or machine-readable instruction sets 1014 from one or more storage devices 1060 and writing data to the one or more storage devices 1060. Those skilled in the relevant art will appreciate that the illustrated embodiments as well as other embodiments may be practiced with other processor-based device configurations, including portable electronic or handheld electronic devices, for instance smartphones, portable computers, wearable computers, consumer electronics, personal computers ("PCs"), network PCs, minicomputers, server blades, mainframe computers, and the like. For example, machine-readable instruction sets 1014 may include instructions to implement DFAD processing, as provided in Figures 1-9.

The processor cores 1018 may include any number of hardwired or configurable circuits, some or all of which may include programmable and/or configurable combinations of electronic components, semiconductor devices, and/or logic elements that are disposed partially or wholly in a PC, server, mobile phone, tablet computer, or other computing system capable of executing processor-readable instructions.

The computing device 1000 includes a bus 1016 or similar communications link that communicably couples and facilitates the exchange of information and/or data between various system components including the processor cores 1018, the cache 1062, the graphics processor circuitry 1012, one or more wireless I/O interface 1020, one or more wired I/O interfaces 1030, one or more storage devices 1060, and/or one or more network interfaces 1070. The computing device 1000 may be referred to in the singular herein, but this is not intended to limit the embodiments to a single computing device 1000, since in certain embodiments, there may be more than one computing device 1000 that incorporates, includes, or contains any number of communicably coupled, collocated, or remote networked circuits or devices.

The processor cores 1018 may include any number, type, or combination of currently available or future developed devices capable of executing machine-readable instruction sets.

The processor cores 1018 may include (or be coupled to) but are not limited to any current or future developed single- or multi-core processor or microprocessor, such as: on or more systems on a chip (SOCs); central processing units (CPUs); digital signal processors (DSPs); graphics processing units (GPUs); application-specific integrated circuits (ASICs), programmable logic units, field programmable gate arrays (FPGAs), and the like. Unless described otherwise, the construction and operation of the various blocks shown in Figure 10 are of conventional design. Consequently, such blocks need not be described in further detail herein, as they will be understood by those skilled in the relevant art. The bus 1016 that interconnects at least some of the components of the computing device 1000 may employ any currently available or future developed serial or parallel bus structures or architectures.

The system memory 1040 may include read-only memory ("ROM") 1042 and random-access memory ("RAM") 1046. A portion of the ROM 1042 may be used to store or otherwise retain a basic input/output system ("BIOS") 1044. The BIOS 1044 provides basic functionality to the computing device 1000, for example by causing the processor cores 1018 to load and/or execute one or more machine-readable instruction sets 1014. In embodiments, at least some of the one or more machine-readable instruction sets 1014 cause at least a portion of the processor cores 1018 to provide, create, produce, transition, and/or function as a dedicated, specific, and particular machine, for example a word processing machine, a digital image acquisition machine, a media playing machine, a gaming system, a communications device, a smartphone, a neural network, a machine learning model, or similar devices.

The computing device 1000 may include at least one wireless input/output (I/O) interface 1020. The at least one wireless I/O interface 1020 may be communicably coupled to one or more physical output devices 1022 (tactile devices, video displays, audio output devices, hardcopy output devices, etc.). The at least one wireless I/O interface 1020 may communicably couple to one or more physical input devices 1024 (pointing devices, touchscreens, keyboards, tactile devices, etc.). The at least one wireless I/O interface 1020 may include any currently available or future developed wireless I/O interface. Example wireless I/O interfaces include, but are not limited to: BLUETOOTH®, near field communication (NFC), and similar.

The computing device 1000 may include one or more wired input/output (I/O) interfaces 1030. The at least one wired I/O interface 1030 may be communicably coupled to one or more physical output devices 1022 (tactile devices, video displays, audio output devices, hardcopy output devices, etc.). The at least one wired I/O interface 1030 may be communicably coupled to one or more physical input devices 1024 (pointing devices, touchscreens, keyboards, tactile devices, etc.). The wired I/O interface 1030 may include any currently available or future developed I/O interface. Example wired I/O interfaces include but are not limited to universal serial bus (USB), IEEE 1394 ("FireWire"), and similar.

The computing device 1000 may include one or more communicably coupled, non-transitory, storage devices 1060. The storage devices 1060 may include one or more hard disk drives (HDDs) and/or one or more solid-state storage devices (SSDs). The one or more storage devices 1060 may include any current or future developed storage appliances, network storage devices, and/or systems. Non-limiting examples of such storage devices 1060 may include, but are not limited to, any current or future developed non-transitory storage appliances or devices, such as one or more magnetic storage devices, one or more optical storage devices, one or more electro-resistive storage devices, one or more molecular storage devices, one or more quantum storage devices, or various combinations thereof. In some implementations, the one or more storage devices 1060 may include one or more removable storage devices, such as one or more flash drives, flash memories, flash storage units, or similar appliances or devices capable of communicable coupling to and decoupling from the computing device 1000.

The one or more storage devices 1060 may include interfaces or controllers (not shown) communicatively coupling the respective storage device or system to the bus 1016. The one or more storage devices 1060 may store, retain, or otherwise contain machine-readable instruction sets, data structures, program modules, data stores, databases, logical structures, and/or other data useful to the processor cores 1018 and/or graphics processor circuitry 1012 and/or one or more applications executed on or by the processor cores 1018 and/or graphics processor circuitry 1012. In some instances, one or more data storage devices 1060 may be communicably coupled to the processor cores 1018, for example via the bus 1016 or via one or more wired communications interfaces 1030 (e.g., Universal Serial Bus or USB); one or more wireless communications interface 1020 (e.g., Bluetooth®, Near Field Communication or NFC); and/or one or more network interfaces 1070 (IEEE 802.3 or Ethernet, IEEE 802.11, or Wi-Fi®, etc.).

Machine-readable instruction sets 1014 and other programs, applications, logic sets, and/or modules may be stored in whole or in part in the system memory 1040. Such machine-readable instruction sets 1014 may be transferred, in whole or in part, from the one or more storage devices 1060. The machine-readable instruction sets 1014 may be loaded, stored, or otherwise retained in system memory 1040, in whole or in part, during execution by the processor cores 1018 and/or graphics processor circuitry 1012.

The computing device 1000 may include power management circuitry 1080 that controls one or more operational aspects of the energy storage device 1082. In embodiments, the energy storage device 1082 may include one or more primary (i.e., non-rechargeable) or secondary (i.e., rechargeable) batteries or similar energy storage devices. In embodiments, the energy storage device 1082 may include one or more supercapacitors or ultracapacitors. In embodiments, the power management circuitry 1080 may alter, adjust, or control the flow of energy from an external power source 1084 to the energy storage device 1082 and/or to the computing device 1000. The external power source 1084 may include, but is not limited to, a solar power system, a commercial electric grid, a portable generator, an external energy storage device, or any combination thereof.

For convenience, the processor cores 1018, the graphics processor circuitry 1012, the wireless I/O interface 1020, the wired I/O interface 1030, the storage device 1060, and the network interface 1070 are illustrated as communicatively coupled to each other via the bus 1016, thereby providing connectivity between the above-described components. In alternative embodiments, the above-described components may be communicatively coupled in a different manner than illustrated in Figure 10. For example, one or more of the above-described components may be directly coupled to other components, or may be coupled to each other, via one or more intermediary components (not shown). In another example, one or more of the above-described components may be integrated into the processor cores 1018 and/or the graphics processor circuitry 1012. In some embodiments, all or a portion of the bus 1016 may be omitted and the components are coupled directly to each other using suitable wired or wireless connections.

Flow charts representative of example hardware logic, machine readable instructions, hardware implemented state machines, and/or any combination thereof for implementing computing device 1000, for example, are shown in Figures 6-9. The machine-readable instructions may be one or more executable programs or portion(s) of an executable program for execution by a computer processor such as the processor 1010 shown in the example computing device 1000 discussed above in connection with Figure 10. The program may be embodied in software stored on a non-transitory computer readable storage medium such as a CD-ROM, a floppy disk, a hard drive, a DVD, a Blu-ray disk, or a memory associated with the processor 1010, but the entire program and/or parts thereof could alternatively be executed by a device other than the processor 1010 and/or embodied in firmware or dedicated hardware. Further, although the example program is described with reference to the flow charts illustrated in Figures 6-9, many other methods of implementing the example computing device 1000 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware.

The machine-readable instructions described herein may be stored in one or more of a compressed format, an encrypted format, a fragmented format, a compiled format, an executable format, a packaged format, etc. Machine readable instructions as described herein may be stored as data (e.g., portions of instructions, code, representations of code, etc.) that may be utilized to create, manufacture, and/or produce machine executable instructions. For example, the machine-readable instructions may be fragmented and stored on one or more storage devices and/or computing devices (e.g., servers). The machine-readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine-readable instructions may be stored in multiple parts, which are individually compressed, encrypted, and stored on separate computing devices, wherein the parts when decrypted, decompressed, and combined form a set of executable instructions that implement a program such as that described herein.

In another example, the machine-readable instructions may be stored in a state in which they may be read by a computer, but require addition of a library (e.g., a dynamic link library (DLL)), a software development kit (SDK), an application programming interface (API), etc., in order to execute the instructions on a particular computing device or other device. In another example, the machine-readable instructions may be configured (e.g., settings stored, data input, network addresses recorded, etc.) before the machine-readable instructions and/or the corresponding program(s) can be executed in whole or in part. Thus, the disclosed machine-readable instructions and/or corresponding program(s) are intended to encompass such machine-readable instructions and/or program(s) regardless of the particular format or state of the machine-readable instructions and/or program(s) when stored or otherwise at rest or in transit.

The machine-readable instructions described herein can be represented by any past, present, or future instruction language, scripting language, programming language, etc. For example, the machine-readable instructions may be represented using any of the following languages: C, C++, Java, C#, Perl, Python, JavaScript, HyperText Markup Language (HTML), Structured Query Language (SQL), Swift, etc.

As mentioned above, the example processes of Figures 3-4 may be implemented using executable instructions (e.g., computer and/or machine-readable instructions) stored on a non-transitory computer and/or machine-readable medium such as a hard disk drive, a solid-state storage device (SSD), a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended.

The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

Descriptors "first," "second," "third," etc. are used herein when identifying multiple elements or components which may be referred to separately. Unless otherwise specified or understood based on their context of use, such descriptors are not intended to impute any meaning of priority, physical order or arrangement in a list, or ordering in time but are merely used as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

The following examples pertain to further embodiments. Example 1 is an apparatus system including a processor to execute a data flow instrumented application to generate data trace data representing data flows of the data flow instrumented application; processor trace circuitry to generate processor trace (PT) data from the data trace data; and a data flow detecting pipeline to monitor the data flows represented by the PT data in real time and generate an alert if one or more of the data flows deviates from a data flow model for the data flow instrumented application.

In Example 2, the subject matter of Example 1 can optionally include a build system to instrument and compile source code of an application to generate the data flow instrumented application.

In Example 3, the subject matter of Example 1 can optionally include a training system to train the data flow model based at least in part on the PT trace data generated by executing the data flow instrumented application in a controlled computing environment.

In Example 4, the subject matter of Example 1 can optionally include wherein the data flow detecting pipeline comprises a PT decoder to generate flow update (FUP)/processor trace write (PTW) packets from the PT trace data.

In Example 5, the subject matter of Example 4 can optionally include wherein the data flow detecting pipeline comprises a data trace decoder to generate data trace records from the FUP/PTW packets.

In Example 6, the subject matter of Example 5 can optionally include wherein the data flow detecting pipeline comprises a data flow tracker to generate data flow records from the data trace records.

In Example 7, the subject matter of Example 6 can optionally include wherein the data flow detecting pipeline comprises a data flow detector to detect if one or more of the data flows deviates from the data flow model for the data flow instrumented application and generate a data flow violation when a deviation is detected.

In Example 8, the subject matter of Example 7 can optionally include wherein the data flow detecting pipeline comprises a time series analyzer to generate the alert when a number of data flow violations exceeds a predetermined level.

In Example 9, the subject matter of Example 1 can optionally include wherein the data flow detecting pipeline comprises a data flow continuous learner to continuously update the data flow model based at least in part on environment feedback.

Example 10 is a method including executing a data flow instrumented application to generate data trace data representing data flows of the data flow instrumented application; generating processor trace (PT) data from the data trace data; and monitoring the data flows represented by the PT data in real time and generating an alert if one or more of the data flows deviates from a data flow model for the data flow instrumented application.

In Example 11, the subject matter of Example 10 can optionally include instrumenting and compiling source code of an application to generate the data flow instrumented application.

In Example 12, the subject matter of Example 10 can optionally include training the data flow model based at least in part on the PT trace data generated by executing the data flow instrumented application in a controlled computing environment.

In Example 13, the subject matter of Example 10 can optionally include comprising generating flow update (FUP)/processor trace write (PTW) packets from the PT trace data.

In Example 14, the subject matter of Example 13 can optionally include generating data trace records from the FUP/PTW packets.

In Example 15, the subject matter of Example 14 can optionally include generating data flow records from the data trace records.

In Example 16, the subject matter of Example 15 can optionally include detecting if one or more of the data flows deviates from the data flow model for the data flow instrumented application and generate a data flow violation when a deviation is detected.

In Example 17, the subject matter of Example 16 can optionally include generating the alert when a number of data flow violations exceeds a predetermined level.

In Example 18, the subject matter of Example 10 can optionally include continuously updating the data flow model based at least in part on environment feedback.

Example 19 is at least one non-transitory machine-readable storage medium comprising instructions that, when executed, cause a processor to execute a data flow instrumented application to generate data trace data representing data flows of the data flow instrumented application; generate processor trace (PT) data from the data trace data; and monitor the data flows represented by the PT data in real time and generate an alert if one or more of the data flows deviates from a data flow model for the data flow instrumented application.

In Example 20, the subject matter of Example 19 can optionally include instructions that, when executed, cause a processor to instrument and compile source code of an application to generate the data flow instrumented application.

In Example 21, the subject matter of Example 19 can optionally include instructions that, when executed, cause a processor to train the data flow model based at least in part on the PT trace data generated by executing the data flow instrumented application in a controlled computing environment.

In Example 22, the subject matter of Example 19 can optionally include instructions that, when executed, cause a processor to generate flow update (FUP)/processor trace write (PTW) packets from the PT trace data.

In Example 23, the subject matter of Example 22 can optionally include instructions that, when executed, cause a processor to generate data trace records from the FUP/PTW packets.

In Example 24, the subject matter of Example 23 can optionally include instructions that, when executed, cause a processor to generate data flow records from the data trace records.

In Example 25, the subject matter of Example 24 can optionally include instructions that, when executed, cause a processor to detect if one or more of the data flows deviates from the data flow model for the data flow instrumented application and generate a data flow violation when a deviation is detected.

Example 26 provides an apparatus comprising means for performing the method of any one of Examples 10-18.

The foregoing description and drawings are to be regarded in an illustrative rather than a restrictive sense. Persons skilled in the art will understand that various modifications and changes may be made to the embodiments described herein without departing from the broader spirit and scope of the features set forth in the appended claims.

**Claims**

1. A system comprising:

    a processor to execute a data flow instrumented application to generate data trace data representing data flows of the data flow instrumented application;
    processor trace circuitry to generate processor trace (PT) data from the data trace data; and
    a data flow detecting pipeline to monitor the data flows represented by the PT data in real time and generate an alert if one or more of the data flows deviates from a data flow model for the data flow instrumented application.

2. The system of claim 1, comprising a build system to instrument and compile source code of an application to generate the data flow instrumented application.

3. The system of claim 1, comprising a training system to train the data flow model based at least in part on the PT trace data generated by executing the data flow instrumented application in a controlled computing environment.

4. The system of claim 1, wherein the data flow detecting pipeline comprises a PT decoder to generate flow update (FUP)/processor trace write (PTW) packets from the PT trace data.

5. The system of claim 4, wherein the data flow detecting pipeline comprises a data trace decoder to generate data trace records from the FUP/PTW packets.

6. The system of claim 5, wherein the data flow detecting pipeline comprises a data flow tracker to generate data flow records from the data trace records.

7. The system of claim 6, wherein the data flow detecting pipeline comprises a data flow detector to detect if one or more of the data flows deviates from the data flow model for the data flow instrumented application and generate a data flow violation when a deviation is detected.

8. The system of claim 7, wherein the data flow detecting pipeline comprises a time series analyzer to generate the alert when a number of data flow violations exceeds a predetermined level.

9. The system of claim 1, wherein the data flow detecting pipeline comprises a data flow continuous learner to continuously update the data flow model based at least in part on environment feedback.

10. A method comprising:

    executing a data flow instrumented application to generate data trace data representing data flows of the data flow instrumented application;
    generating processor trace (PT) data from the data trace data; and
    monitoring the data flows represented by the PT data in real time and generating an alert if one or more of the data flows deviates from a data flow model for the data flow instrumented application.

11. The method of claim 10, comprising instrumenting and compiling source code of an application to generate the data flow instrumented application.

12. The method of claim 10, comprising training the data flow model based at least in part on the PT trace data generated by executing the data flow instrumented application in a controlled computing environment.

13. The method of claim 10, comprising generating flow update (FUP)/processor trace write (PTW) packets from the PT trace data.

14. The method of claim 13, comprising generating data trace records from the FUP/PTW packets.

15. Machine-readable storage including machine-readable instructions, when executed, to implement a method or realize an apparatus as claimed in any preceding claim.

FIG. 1

FIG. 2

**FIG. 3**

402

FOR EACH NEW
TRAINING DATA FLOW

404

DATA FLOW
IN DATA FLOW
MODEL?

YES

410

DATA FLOW LENGTH
> DATA FLOW WEIGHT?

NO

NO

YES

406

ADD DATA FLOW
TO DATA FLOW
MODEL

412

UPDATE DATA FLOW
WEIGHT IN DATA FLOW
MODEL

408

END

400

FIG. 4

FIG. 5

500

**FIG. 6**

EP 4 191 450 A1

510

DATA
TRACE
RECORDS

512

DATA FLOW
TRACKER

514

DATA
FLOW
RECORDS

702

DATA
SOURCE
DATABASE

700

# FIG. 7

START

802
INPUT
BUFFER?

NO

YES

804
FIND DATA SOURCE FROM
DATA SOURCE DATABASE

806
GENERATE A NEW
DATA FLOW RECORD

808
OUTPUT
BUFFER?

NO

YES

810
ADD NEW DATA SOURCE
TO DATA SOURCE DATABASE

END

800

## FIG. 8

902

INSTRUMENT AND COMPILE SOURCE CODE
OF AN APPLICATION

904

EXECUTE APPLICATION BY
TRAINING SYSTEM TO COLLECT PT TRACES

906

EXTRACT DATA TRACES FROM COLLECTED PT TRACES,
CONVERT THE DATA TRACES TO DATA FLOWS AND
TRAIN DATA FLOW MODEL FOR THE APPLICATION

908

DEPLOY APPLICATION AND DATA FLOW
MODEL TO PRODUCTION SYSTEM

910

EXECUTE APPLICATION BY PRODUCTION
SYSTEM AND MONITOR DATA FLOWS IN REAL TIME

912

GENERATE DATA FLOW ALERT IF ONE OR MORE
DATA FLOWS OF APPLICATION DEVIATES FROM
DATA FLOW MODEL

914

CONTINUOUSLY UPDATE DATA FLOW MODEL
IN PRODUCTION SYSTEM BASED ON
ENVIRONMENT FEEDBACK

900

FIG. 9

FIG. 10

Europäisches
Patentamt

European
Patent Office

Office européen
des brevets

# EUROPEAN SEARCH REPORT

Application Number

EP 22 20 1662

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HONG HU ET AL: "Enforcing Unique Code Target Property for Control-Flow Integrity", COMPUTER AND COMMUNICATIONS SECURITY, ACM, 2 PENN PLAZA, SUITE 701NEW YORKNY10121-0701USA, 15 January 2018 (2018-01-15), pages 1470-1486, XP058421206, DOI: 10.1145/3243734.3243797 ISBN: 978-1-4503-5693-0 | 1,2,6,7, 10-12,15 | INV. G06F21/54 |
| Y | * 1. Introduction * * 2. Problem * | 3-5,8,9, 13,14 | |
| Y | JILIANG ZHANG ET AL: "DeepCheck: A Non-intrusive Control-flow Integrity Checking based on Deep Learning", ARXIV.ORG, CORNELL UNIVERSITY LIBRARY, 201 OLIN LIBRARY CORNELL UNIVERSITY ITHACA, NY 14853, 6 May 2019 (2019-05-06), XP081272593, * A. The Framework of DeepCheck * | 3-5,8,9, 13,14 | |
| A | CN 109 829 543 B (TECH & ENGINEERING CT FOR SPACE UTILIZATION CAS) 26 May 2020 (2020-05-26) * paragraph [0002] – paragraph [0060] * | 1-15 | TECHNICAL FIELDS SEARCHED (IPC) G06F G06N |

The present search report has been drawn up for all claims

| Place of search | Date of completion of the search | Examiner |
|---|---|---|
| Munich | 13 April 2023 | Chabot, Pedro |

EPO FORM 1503 03.82 (P04C01)

## ANNEX TO THE EUROPEAN SEARCH REPORT
## ON EUROPEAN PATENT APPLICATION NO.

EP 22 20 1662

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2023

| Patent document cited in search report | Publication date | Patent family member(s) | Publication date |
|---|---|---|---|
| CN 109829543 B | 26-05-2020 | NONE | |

EPO FORM P0459

For more details about this annex : see Official Journal of the European Patent Office, No. 12/82